# EUROPÄISCHE PATENTSCHRIFT

(11) **EP 0 463 548 B1**
(45) Veröffentlichungstag und Bekanntmachung des Hinweises auf die Patenterteilung: **20.03.1996**
(21) Anmeldenummer: 91110009.7
(22) Anmeldetag: 19.06.1991
(51) Int. Cl.: G01F 1/68, G01P 5/12

(54) **Flächenwiderstand für Anemometer**
Surface resistor for anemometer
Résistance de surface pour des anémomètres

(30) Priorität: 22.06.1990 DE 4019875
(43) Veröffentlichungstag der Anmeldung: 02.01.1992
(73) Patentinhaber: SENSYCON GESELLSCHAFT FÜR INDUSTRIELLE SENSORSYSTEME UND PROZESSLEITTECHNIK MBH, D-30179 Hannover (DE)
(72) Erfinder: Hohenstatt, Martin, W-6451 Hammersbach (DE); Link, Dieter, W-6450 Hanau 11 (DE); Eckert, Karlheinz, W-6466 Gründau 3 (DE); Prokopec, Otakar, W-6450 Hanau1 (DE)
(74) Vertreter: Meissner, Peter E., Dipl.-Ing.

(56) Entgegenhaltungen:
- DD-A- 100 825
- DD-A- 138 489
- DD-A- 221 871
- DE-A- 3 127 081
- DE-A- 3 823 642
- US-A- 4 429 298
- "ELECTRONICS ENGINEERS' HANDBOOK", 2. Auflage 1975 (1982), D.G. FINK et al., McGraw Hill, New York, Seiten 7-78 - 7-79

## Beschreibung

Die Erfindung bezieht sich auf ein Anemometer zur Strömungsgeschwindigkeits- oder Massenstrommessung von Gasen oder Flüssigkeiten, insbesondere zur Bestimmung einer durch einen Kanal einer Brennkraftmaschine angesaugten Luftmenge, mit auf einem elektrisch isolierenden Träger angeordneten flächigen Widerstand, der zur Ausbildung einer mäanderförmigen Stromlaufbahn mit parallel zueinander verlaufenden ersten und zweiten Trennlinien versehen ist, die von vorzugsweise in Richtung der Strömung bzw. des Massenstroms verlaufenden ersten und zweiten Basislinien ausgehen, wobei die Breite von durch Trennlinien begrenzten im wesentlichen senkrecht zur Richtung der Strömung bzw. des Massenstroms verlaufenden Stromlaufbahnabschnitten variiert, insbesondere die Breiten der Stromlaufbahnabschnitte so dimensioniert sind, daß die elektrische Heizleistungsdichte in jedem Stromlaufbahnabschnitt im oder weitgehend im selben Maß wie die örtliche von der Strömung bzw. dem Massenstrom abgeführte Wärmestromdichte mit zunehmendem Abstand des Stromlaufbahnabschnitts in Richtung der Strömung abnimmt.

Ein entsprechendes Anemometer ist der DE-A-31 27 081 zu entnehmen. Durch Veränderung der Breite von aufeinanderfolgenden Stromlaufbahnabschnitten, d.h., die Breite von Stromlaufbahnabschnitt zu Stromlaufbahnabschnitt nimmt von der Anströmkante in Strömungsrichtung zu, wird unabhängig von der zu messenden Strömungsgeschwindigkeit bzw. des Massenstroms eine erhebliche Verkürzung der Ansprechzeit des Anemometers erzielt.

Herstellungstechnisch können nun die Widerstände entsprechender Anemometer voneinander variieren. Trotz dieser Abweichungen sollen jedoch die Anemometer bei bestimmten Temperaturen bestimmte Widerstandswerte aufweisen. Häufig ist es z.B. erwünscht, daß bei einer Temperatur von 0°C der vorzugsweise als Dünnschicht- oder Filmwiderstand ausgebildete Widerstand einen Wert von 9 Ω aufweist. Bekannte Maßnahmen, um eine entsprechende Widerstandserhöhung vorzunehmen, sehen vor, daß z.B. eine punktuelle Strompfadbreitenreduzierung erfolgt, wodurch zwar der Gesamtwiderstand einen gewünschten Wert einnimmt, jedoch gleichzeitig eine unerwünschte Temperaturerhöhung in dem Bereich der Strompfadverengung auftritt. Dies wiederum bedeutet, daß die gewünschten gleichmäßigen Temperaturverhältnisse über den Flächenwiderstand nicht vorliegen, so daß infolgedessen die angestrebte kurze Ansprechzeit nicht realisierbar ist.

Aufgabe der vorliegenden Erfindung ist es, ein Anemometer der eingangs genannten Art so weiterzubilden, daß der Widerstandswert des vorzugsweise als Dünnschicht- oder Filmwiderstand ausgebildeten, auf dem flächigen Träger angeordneten Widerstandes erhöht werden kann, ohne daß eine Veränderung der Temperaturverteilung über den Widerstand erfolgt.

Die Aufgabe wird erfindungsgemäß im wesentlichen dadurch gelöst, daß den Trennlinien parallel zu diesen verlaufende Widerstandstrimmlinien zugeordnet sind, wobei die Widerstandstrimmlinien von den Basislinien ausgehen, mit denen auch die zugeordneten Trennlinien verbunden sind, und der Abstand zwischen den Widerstandstrimmlinien und den zugeordneten Trennlinien derart variiert, daß der wirksame Widerstand eines jeden eine Widerstandstrimmlinie aufweisenden Stromlaufbahnabschnitts prozentual im gleichen Umfang vergrößert ist. Mit anderen Worten wird der elektrische Widerstand eines jeden Strombahnabschnitts prozentual im gleichen Umfang erhöht, in dem zu den vorhandenen Trennlinien Parallellinien z.B. durch Laser geschnitten werden. Folglich nimmt auch weiterhin die elektrische Heizleistungsdichte in jedem Stromlaufbahnabschnitt im oder weitgehend im selben Maß, wie die örtliche von der Strömung bzw. dem Massenstrom abgeführte Wärmestromdichte mit zunehmendem Abstand des Stromlaufbahnabschnitts in Richtung der Strömung ab.

Die Trimmlinien gehen selbstverständlich von den Basislinien aus, von denen auch die jeweiligen Trennlinien ausgehen.

Durch die Parallelschnitte werden folglich tote Widerstandsmaterialbahnen erzeugt, durch die der Gesamtwiderstand des flächigen Widerstands im gewünschten Umfang erhöht wird.

Folglich kann mit einfachen Maßnahmen der Widerstand des Widerstandsmaterial im gewünschten Umfang getrimmt werden, ohne daß die Vorteile verlassen werden, die mit einem Anemometer gemäß der DE-A-31 27 081 erreicht werden konnten.

Vorzugsweise ist die Länge der Widerstandstrimmlinie und die der Trennlinie gleich oder im wesentlichen gleich.

Nach einem weiteren Vorschlag kann der Abstand der Widerstandstrimmlinie zu der Trennlinie in einem Abstand verlaufen, daß der Widerstandswert eines jeden Stromlaufbahnabschnitts um bis maximal 20% erhöht wird.

Zwar verläuft die Widerstandstrimmlinie grundsätzlich zu der Trennlinie beabstandet. Dies ist jedoch kein zwingendes Merkmal. Vielmehr kann die Widerstandstrimmlinie derart zu der Trennlinie verlaufen, daß diese verbreitert ist.

Die Widerstandstrimmlinien verlaufen erfindungsgemäß anströmseitig vor den jeweiligen Trennlinien. Daher muß die mit der ersten Trennlinie verbundene Basislinie anströmseitig verlängert werden, damit die Widerstandstrimmlinie mit dieser verbindbar ist.

Zwischen der letzten abströmseitigen Trennlinie und dem abströmseitigen Längsrand des Widerstandsmaterials verläuft grundsätzlich keine Widerstandstrimmlinie. Im Bedarfsfall kann jedoch nach einer weiteren Ausbildung der Erfindung vorgesehen sein, daß dem abströmseitigen Längsrand des flächigen Widerstandes gleichfalls eine Widerstandstrimmlinie zugeordnet ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Draufsicht auf einen auf einem Träger angeordneten flächigen Widerstand eines Anemometers und
- Fig. 2: eine Schnittdarstellung entlang der Linie II-II in Fig. 1.

In den Figuren ist ein auf ein aus elektrisch isolierendem Material bestehender flächiger Trägerkörper (10), der in Richtung der zu messenden Strömungsgeschwindigkeit (Pfeil (12)) eines Fluides wie insbesondere Ansaugluft von Verbrennungsmotoren angeordnet ist, ein im wesentlich ganzflächig aufgetragenes Widerstandsmaterial (14) angeordnet. Hierbei kann es sich um z.B. durch Sputtern aufgetragenes Platin handeln, um so einen Dünnschichtwiderstand auf dem Substratträger (10) aufzubauen.

Durch z.B. Ätztechnik oder durch Trennen mittels Laserstrahls wird eine mäanderförmig verlaufende Strombahn (16) eingeprägt. Hierzu gehen von parallel zur Strömungsrichtung (12) verlaufenden Basislinien (18) und (20) Trennlinien (22) und (24) bzw. (26) und (28) aus. Der zwischen den Trennlinien (18) und (20) und den Seitenrändern (30) und (32) verlaufende Bereich des Widerstandsmaterials wird sodann über nicht dargestellte Anschlüsse in z.B. eine Brückenschaltung geschaltet, um so nach bekannten Meßanordnungen die Änderung des Widerstandswertes des Flächenwiderstandes (16) und somit die Geschwindigkeit des den Widerstand überstreichenden Fluids zu bestimmen.

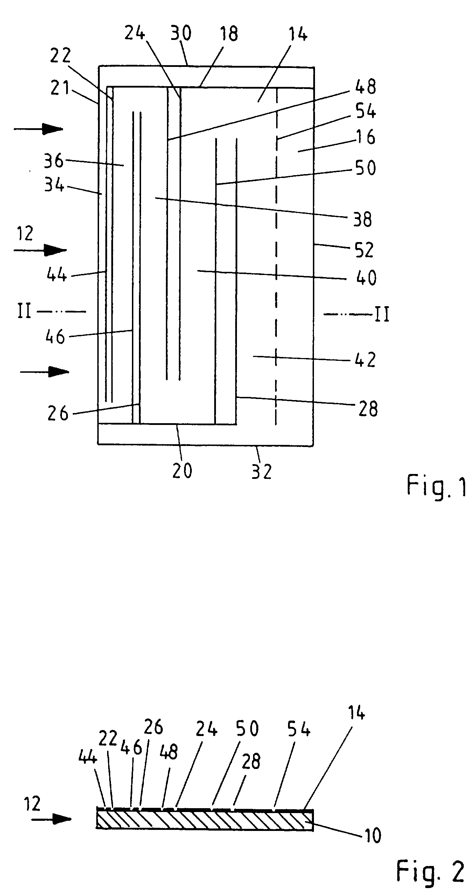

Wie die Draufsicht nach der Fig. 1 verdeutlicht, ist die määnderförmige Stromlaufbahn (16) in bezug auf die Breite der einzelnen Stromlaufbahnabschnitte (34), (36), (38),(40) bzw. (42) asymmetrisch ausgelegt. Die Breite der einzelnen Stromlaufbahnabschnitte (34), (36), (38), (40) bzw. (42) nimmt erkennbar von der Anströmkante (21) her zu. Hierdurch wird erreicht, daß die elektrische Heizleistungsdichte in jedem Stromlaufbahnabschnitt im oder weitgehend im selben Maß, wie die örtliche von der Strömung bzw. dem Massenstrom abgeführte Wärmestromdichte mit zunehmendem Abstand des Stromlaufbahnabschnitts in Richtung der Strömung abnimmt. Hierdurch gelingt es, unabhängig von der Strömungsgeschwindigkeit bzw. des Massenstroms die Temperatur des gesamten Dünnschichtwiderstands (14) konstant zu halten. Infolgedessen ergeben sich kurze Ansprechzeiten.

Herstellungsbedingt weisen die Dünnschichtwiderstände grundsätzlich einen niedrigeren Widerstandswert als einen gewünschten auf. Um ein Trimmen, also ein Erhöhen des Widerstandswertes zu ermöglichen, ohne daß das zuvor charakterisierte Temperaturverhalten des Widerstandsmaterials (14) negativ beeinflußt wird, ist erfindungsgemäß vorgesehen, daß parallel zu den die Mäanderform bestimmenden Trennlinien (22), (24), (26) und (28) Widerstandstrimmlinien (44), (46), (48) und (50) angeordnet werden, die von den Basislinien (18) und (20) ausgehen, mit denen auch die zugeordneten Trennlinien (22), (24) (26) und (28) verbunden sind.

Dabei variiert der Abstand zwischen den Widerstandstrimmlinien (44), (46), (48) und (50) zu den zugeordneten Trimmlinien (22), (24), (26) und (28) derart, daß der Widerstandswert eines jeden Stromlaufbahnabschnittes (34), (36),(38),(40) prozentual im gleichen Umfang erhöht wird. Hierdurch nimmt weiterhin die elektrische Heizleistungsdichte in jedem Stromlaufbahnabschnitt im oder weitgehend im selben Maß, wie die örtliche von der Strömung bzw. dem Massenstrom abgeführte Wärmestromdichte mit zunehmendem Abstand des Stromlaufbahnabschnitts in Richtung der Strömung, also von der Anströmkante (21) ab.

Die Länge einer jeden Widerstandstrimmlinie (44), (46), (48) und (50) ist vorzugsweise gleich der Länge der zugeordneten Trennlinie (22), (24), (26) und (28). Ferner kann gegebenenfalls parallel zu dem abströmseitigen Längsrand (52) eine in der Fig. 1 gestrichelt dargestellte weitere Widerstandstrimmlinie (54) verlaufen, durch die prozentual der Widerstandswert des Stromlaufbahnabschnitts (42) entsprechend der der Stromlaufbahnen (34), (36), (38) und (40) erhöht wird.

Die Widerstandstrimmlinien (44), (46), (48), (50) und gegebenenfalls (54) können zu den zugeordneten Trennlinien (22), (24), (26), (28) und gegebenenfalls des Längsrandes (52) in einem Abstand angeordnet werden, daß sich eine maximale Widerstandserhöhung um 20% ergibt. Hierdurch ist sichergestellt, daß die Flächenwiderstände (14) im gewünschten Umfang getrimmt werden können.

Der Abstand zwischen den Basislinien (18) und (20), also der aktive Bereich des Dünnschichtwiderstandes (14), dessen Widerstandswertsänderung zur Bestimmung der Strömungsgeschwindigkeit herangezogen wird, kann eine Länge von 7 mm aufweisen. Die Breite zwischen dem anströmseitigen und dem abströmseitigen Rand kann sich auf 2 mm bei einer Substratdicke von 150 µm belaufen. In der Praxis ist ferner der Bereich zwischen den Basislinien (18) und (20) und den Seitenrändern (30) und (32) um ein Vielfaches größer als in der Zeichnung dargestellt. So kann der Abstand zu der Basislinie (18) bzw. (20) und dem zugeordneten Seitenrand (30) bzw. (32) 2,5 mm betragen.

## Patentansprüche

1. Anemometer zur Strömungsgeschwindigkeits- oder Massenstrommessung von Gasen oder Flüssigkeiten, insbesondere zur Bestimmung einer durch einen Kanal einer Brennkraftmaschine angesaugten Luftmenge, mit auf einem elektrisch isolierenden Träger (10) angeordneten flächigen Widerstand (14), der zur Ausbildung einer mäanderförmigen Stromlaufbahn (16) mit parallel zueinander verlaufenden ersten und zweiten Trennlinien (22, 24; 26, 28) versehen ist, die von vorzugsweise in Richtung (12) der Strömung bzw. des Massenstroms verlaufenden ersten und zweiten Basislinien (18, 20) ausgehen, wobei die Breite von durch Trennlinien begrenzten, im wesentlichen senkrecht zur Richtung der Strömung bzw. des Massenstroms verlaufenden Stromlaufbahnabschnitten (34, 36, 38, 40, 42) variiert, insbesondere die Breiten der Stromlaufbahnabschnitte so dimensioniert sind, daß die elektrische Heizleistungsdichte in jedem Stromlaufbahnabschnitt im oder weitgehend im selben Maß wie die örtliche von der Strömung bzw. dem Massenstrom abgeführte Wärmestromdichte mit zunehmendem Abstand des Stromlaufbahnabschnitts in Richtung der Strömung abnimmt,
**dadurch gekennzeichnet,**
daß den Trennlinien (22, 24, 26, 28) parallel zu diesen verlaufende Widerstandstrimmlinien (44, 46, 48, 50) zugeordnet sind, wobei die Widerstandstrimmlinien von den Basislinien (18, 20) ausgehen, mit denen auch die zugeordneten Trennlinien verbunden sind, und der Abstand zwischen den Widerstandstrimmlinien und den zugeordneten Trennlinien derart variiert, daß der wirksame Widerstand eines jeden eine Widerstandstrimmlinie aufweisenden Stromlaufbahnabschnitts (34, 36, 38, 40) prozentual im gleichen Umfang vergrößert ist.

2. Anemometer nach Anspruch 1,
**dadurch gekennzeichnet,**
daß jeder Trennlinie (22, 24, 26, 28) eine Widerstandstrimmlinie (44, 46, 48, 50) zugeordnet ist.

3. Anemometer nach Anspruch 1,
**dadurch gekennzeichnet,**
daß die Widerstandstrimmlinie (44, 46, 48, 50) anströmseitig vor der zugeordneten Trimmlinie (22, 24, 26, 28) verläuft.

4. Anemometer nach zumindest Anspruch 1,
**dadurch gekennzeichnet,**
daß die Länge der Widerstandstrimmlinie (44, 46, 48, 50) und die der zugeordneten Trennlinie (22, 24, 26, 28) gleich oder im wesentlichen gleich ist.

5. Anemometer nach zumindest Anspruch 1,
**dadurch gekennzeichnet,**
daß der Abstand der Widerstandstrimmlinie (44, 46, 48, 50) zu der zugeordneten Trennlinie (22, 24, 26, 28) in einem Abstand verläuft, daß der Widerstandswert eines jeden Stromlaufbahnabschnitts (34, 36, 38, 40) bis maximal 20% erhöht ist.

6. Anemometer nach zumindest Anspruch 1,
**dadurch gekennzeichnet,**
daß die Widerstandstrimmlinie (44, 46, 48, 50) zu der zugeordneten Trennlinie (22, 24, 26, 28) derart verläuft, daß letztere verbreitert ist.

7. Anemometer nach Anspruch 1,
**dadurch gekennzeichnet**,
daß dem abströmseitigen Längsrand (52) des flächigen Widerstands (14) eine Widerstandstrimmlinie (54) zugeordnet ist.

## Claims

1. An anemometer for measuring the velocity of flow or mass flow of gases or liquids, particularly for determining an amount of air drawn by suction through a duct of an internal combustion engine, having a flat resistor (14) disposed on an electrically insulating support (10), which resistor is provided with first and second separating lines (22, 24; 26, 28) running parallel to each other to form a meander-shaped current flow path (16), which separating lines run out from first and second base lines (18, 20) which preferably run in the direction (12) of flow or mass flow, wherein the width of current flow path sections (34, 36, 38, 40, 42), which are delimited by separating lines and which run substantially perpendicularly to the direction of flow or mass flow, varies, and in particular the widths of the current flow path sections are sized so that the electrical heating power density in each current flow path section decreases by the same extent or by substantially the same extent as the local heat flux density dissipated from the flow or from the mass flow decreases with increasing distance of the current flow path section in the direction of flow,
characterised in that
resistance trimming lines (44, 46, 48, 50) running parallel to the separating lines (22, 24, 26, 28) are associated with the latter, wherein the resistance trimming lines (44, 46, 48, 50) run out from the base lines (18, 20) to which the associated separating lines are also connected, and the distance between the resistance trimming lines and the associated separating lines is varied in such a way that the effective resistance of each current flow path section (34, 36, 38, 40) which comprises a resistance trimming line is increased by the same percentage amount.

2. An anemometer according to claim 1,
characterised in that
a resistance trimming line (44, 46, 48, 50) is associated with each separating line (22, 24, 26, 28).

3. An anemometer according to claim 1,
characterised in that
the resistance trimming line (44, 46, 48, 50) runs in front of the associated separating line (22, 24, 26, 28) on the flow impingement side.

4. An anemometer according to claim 1 at least,
characterised in that
the length of the resistance trimming line (44, 46, 48, 50) and that of the associated separating line (22, 24, 26, 28) are equal or substantially equal.

5. An anemometer according to claim 1 at least,
characterised in that
the distance from the resistance trimming line (44, 46, 48, 50) to the associated separating line (22, 24, 26, 28) extends at an interval such that the resistance value of each current flow path section (34, 36, 38, 40) is increased by a maximum of 20 %.

6. An anemometer according to claim 1 at least,
characterised in that
the resistance trimming line (44, 46, 48, 50) runs in relation to the associated separating line (22, 24, 26, 28) in such a way that the latter is widened.

7. An anemometer according to claim 1,
characterised in that
a resistance trimming line (54) is associated with the longitudinal edge (52) on the downstream side of the flat resistor (14).

## Revendications

1. Anémomètre pour la mesure de la vitesse d'écoulement ou du courant de masse de gaz ou de liquides, en particulier pour déterminer une quantité d'air aspirée à travers un canal d'un moteur à combustion interne, comportant une résistance plane (14) agencée sur un support (10) électriquement isolant et munie pour la réalisation d'une voie de circulation de courant (16) en forme de méandres de premières et secondes lignes de séparation (22,24;26,28) s'étendant parallèlement les unes par rapport aux autres et partant de première et seconde lignes de base (18,20) qui s'étendent de préférence en direction (12) de l'écoulement ou du courant de masse, la largeur de tronçons (34,36,38, 40,42) de la voie de circulation de courant limités par les lignes de séparation et s'étendant pour l'essentiel perpendiculairement à la direction de l'écoulement ou du courant de masse variant, en particulier les largeurs des tronçons de la voie de circulation de courant étant dimensionnées de sorte que la valeur de la puissance calorifique décroît dans chaque tronçon de la voie de circulation de courant de la même façon ou sensiblement de la même façon que la valeur de l'écoulement de chaleur localisée et évacuée par l'écoulement ou le courant de masse, avec un écartement croissant des tronçons de la voie de circulation de courant dans le sens de l'écoulement,
caractérisé en ce que des lignes de résistance (44,46,48,50) sont agencées parallèlement aux lignes de séparation (22, 24,26,28), les lignes de résistance partant des lignes de base (18,20), auxquelles sont également reliées les lignes de séparation associées, et l'écartement entre les lignes de résistance et les lignes de séparation associées étant varié de sorte que la résistance effective de chaque tronçon (34,36,38,40) de la voie de circulation de courant comportant une ligne de résistance est augmentée du même pourcentage.

2. Anémomètre selon la revendication 1,
caractérisé en ce qu'une ligne de résistance (44,46,48,50) est associée à chaque ligne de séparation (22,24,26,28).

3. Anémomètre selon la revendication 1,
caractérisé en ce que la ligne de résistance (44,46,48,50) s'étend dans le sens d'écoulement en amont de la ligne de séparation associée (22,24,26,28).

4. Anémomètre selon au moins la revendication 1,
caractérisé en ce que la longueur de la ligne de résistance (44,46,48,50) et la longueur de la ligne de séparation associée (22,24,26,28) sont égales ou à peu près égales.

5. Anémomètre selon au moins la revendication 1,
caractérisé en ce que l'écartement entre la ligne de résistance (44,46,48,50) et la ligne de séparation associée (22,24,26,28) est tel que la valeur de la résistance de chaque tronçon (34,36,38,40) de la voie de circulation de courant est augmentée au maximum de 20%.

6. Anémomètre selon au moins la revendication 1,
caractérisé en ce que la ligne de résistance (44,46,48,50) s'étend par rapport à la ligne de séparation associée (22,24,26,28) de sorte que cette dernière est élargie.

7. Anémomètre selon la revendication 1,
caractérisé en ce qu'une ligne de résistance (54) est associée au bord longitudinal (52) de la résistance plane (14), en aval dans le sens d'écoulement.
